# FASCICULE DE BREVET EUROPEEN

(11) **EP 1 854 591 B1**
(45) Date de publication et mention de la délivrance du brevet: **28.07.2010**
(21) Numéro de dépôt: 07350006.8
(22) Date de dépôt: 10.05.2007
(51) Int. Cl.: B25J 17/02

(54) **Robot parallèle**
Parallelroboter
Parallel robot

(30) Priorité: 11.05.2006 FR 0604169
(43) Date de publication de la demande: 14.11.2007
(73) Titulaire: Marel Food Systems hf., 210 Gardabær (IS)
(72) Inventeur: Chenu, Jean-Marie, 44100 Nantes (FR)
(74) Mandataire: Tournel, Jean Louis

(56) Documents cités:
- EP-A- 1 129 829
- WO-A-2004/106011
- US-A- 5 847 528
- US-A1- 2005 159 075

## Description

L'invention se rapporte à un dispositif de déplacement d'un objet dans l'espace.

Pour déplacer un objet dans l'espace, on connaît les bras manipulateurs dont les articulations sont montées en série et ceux dont les articulations sont montées en parallèles. Ces bras sont encore appelés robots.

Les robots types à articulations en série présentent l'inconvénient d'être relativement lourds et ont donc une inertie importante qui les empêche de travailler avec de grandes cadences.

Les robots dits parallèles permettent des déplacements beaucoup plus rapides mais l'amplitude des mouvements est restreinte.

L'invention se rapporte à un robot dit parallèle.

On connaît précisément un tel robot EP-A-250 470 comprenant trois actionneurs comportant une partie fixe et une partie mobile ayant un seul degré de liberté par rapport à la partie fixe, chaque partie mobile étant reliée à une tête mobile par des éléments de liaison.

Le dispositif forme une sorte de pyramide déformable à bases triangulaires.

Chaque actionneur est un moteur électrique dont l'axe de rotation est couplé à un bras (partie mobile) qui pivote autour de l'axe de rotation de l'actionneur.

Les axes de pivots des bras forment un triangle et les éléments de liaison sont articulés respectivement à une tête (petite base) et à la partie mobile correspondante.

Les articulations de ces éléments de liaison tant sur le bras que sur la tête sont à deux degrés de liberté.

Ainsi, l'orientation et l'inclinaison de la tête restent inchangées dans l'espace.

Un préhenseur à transmission télescopique est monté au centre du système.

Un support central porte les actionneurs. Ce support central a sensiblement les dimensions définies par les trois axes de pivot.

Les paliers de rotation des bras qui pivotent sont à cheval sur les axes de pivot et inscrits chacun pour moitié dans la surface définie par les axes de pivot des bras.

Les bras sont, au moins dans leur partie terminale, radiaux et s'étendent vers l'extérieur du support central. L'amplitude de déplacement est minimisée par l'étendue du support qui doit avoir une taille suffisante pour porter les actionneurs et souvent un quatrième bras formant préhenseur reliant la grande base à la petite base. L'amplitude de mouvement est liée à la longueur utile du bras.

L'encombrement est défini par le cercle passant par les extrémités des bras lorsque le système est en position neutre, les bras sont alors dans un même plan ici horizontal.

On comprend bien que plus le support est de grande dimension pour un encombrement donné, plus la longueur des bras sera réduite. Ainsi pour un encombrement d'environ 550 millimètres de rayon, la longueur du bras est de 350 millimètres, la hauteur travail est ainsi de l'ordre de 300 à 350 millimètres.

Pour augmenter la longueur des bras, pour un encombrement donné, il faut réduire la taille du support mais celui ci dépend de la taille des actionneurs et dans les configurations connues il ne peut être fortement réduit.

On peut certes augmenter l'encombrement mais cela pose également des soucis d'implantation.

EP-A-1 129 829, sur lequel repose le préambule de la revendication 1, montre un perfectionnement à ce type de dispositif apporté au montage du préhenseur à transmission télescopique monté au centre du système pour augmenter l'amplitude de déplacement de la transmission. Ce perfectionnement impose d'augmenter la taille du triangle pour dégager une ouverture plus large pour le préhenseur.

On connait des systèmes à déplacements sphériques et orientables d'une tête WO 2004/106011, US2005/0159075 ou US5847528 permettant l'orientation de la dite tête. La problématique est différente. Elle ne prend pas en compte la cadence et l'amplitude du mouvement de ces machines dont l'objectif est de prendre un objet posé sur un plan, de le déplacer très rapidement vers un autre plan, en changeant éventuellement son orientation par le mouvement du préhenseur en parallèle à son déplacement, puis de revenir saisir un autre objet (pick and place).

L'invention propose un dispositif qui apporte une plus grande amplitude de travail notamment dans le mouvement horizontal des bras.

A cet effet, l'invention se rapporte à un dispositif de déplacement selon la revendication 1. Des mises en oeuvre de l'invention sont définies dans les revendications dépendantes.

L'invention sera bien comprise à la lecture de la description ci-après faite à titre d'exemple non limitatif en regard du dessin qui représente :
FIG 1 : Etat de la technique en vue de dessus simplifiée
FIG 2 à FIG 4 : L'invention en vue de dessus simplifiée les axes de pivots étant radiaux.
FIG 5 à FIG 7 : L'invention en vues de dessus simplifiées les axes de pivots formant un triangle
FIG 8 : Vue en perspective de l'invention.
FIG 9 : Vue en perspective d'une variante de l'invention.
FIG 10 : Vue de dessus d'un robot avec des bras droits.
FIG 11A: Vue de face d'un exemple de robot
FIG 11B: Coupe selon AA de la figure 11A
FIG 12A: Vue de face d'un robot avec un préhenseur
FIG 12B: Vue d'un détail.
FIG 13A,13B, 13C : Différentes têtes.

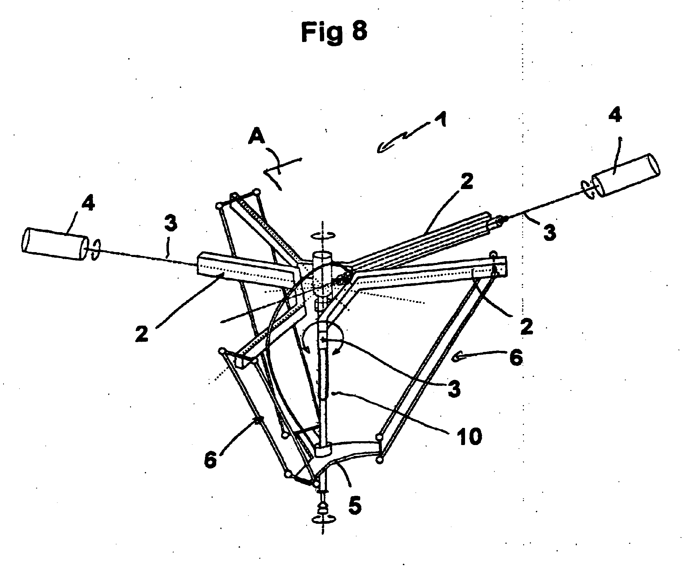

En se reportant à la figure 8, on voit un dispositif 1 de déplacement d'objets du type parallèle.

Ce dispositif permet de déplacer des objets avec une cadence élevée.

Classiquement, le dispositif comprend au moins trois bras 2 pivotants chacun autour d'un axe 3 de pivot, lesdits axes de pivots étant dans un même plan ici horizontal.

Un actionneur 4 engage au moins indirectement une des deux extrémités de chaque bras pivotant, chacun de ces bras 2 étant en outre relié à une tête 5 par l'intermédiaire d'éléments de liaison 6 articulés respectivement sur la tête et sur le bras. Ces articulations sont à deux degrés de liberté.

Le dispositif de déplacement du type parallèle forme une sorte de pyramide tronquée déformable à bases triangulaires (pour trois axes de pivots) comprenant au moins trois bras 2 pivotants chacun autour d'un axe 3 de pivot guidé en rotation sur au moins un palier 7, chacun des bras étant actionné par un actionneur 4, lesdits axes de pivots étant éventuellement dans un même plan dite plan A de la grande base et chacun de ces bras étant, en outre, relié à une tête 5 formant une petite base par l'intermédiaire d'éléments de liaison 6 articulés respectivement sur la tête et sur le bras à deux degrés de liberté, la tête gardant toujours son orientation et son inclinaison lorsque la tête se déplace dans un plan. La tête ne se déplace pas selon des mouvements sphériques.

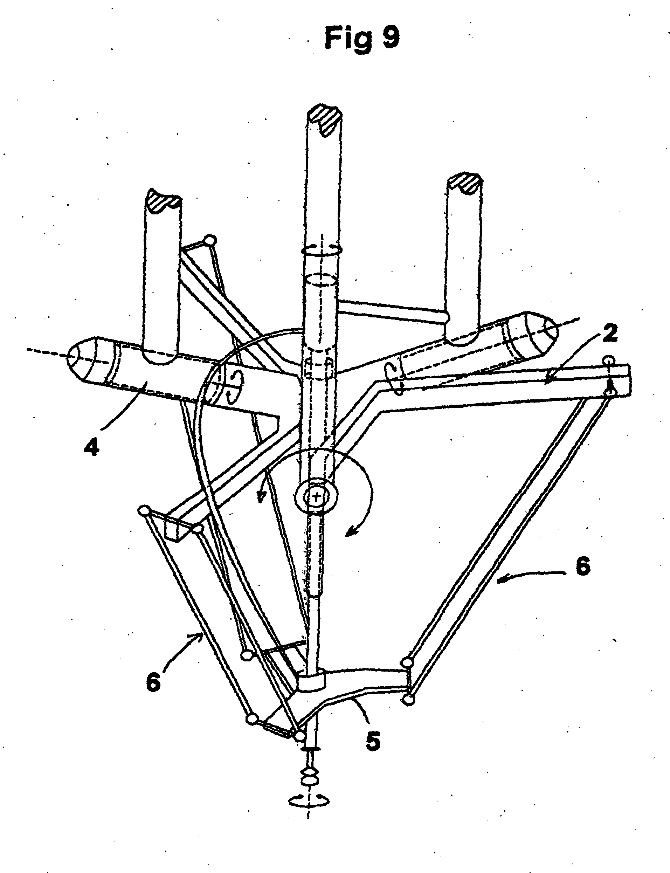

A l'exception de la figure 9, les axes de pivots sont dans un même plan.

Pour la figure 9, les axes de pivots sont inclinés vers le bas en direction du centre. Ils pourraient être inclinés vers le haut en direction du centre.

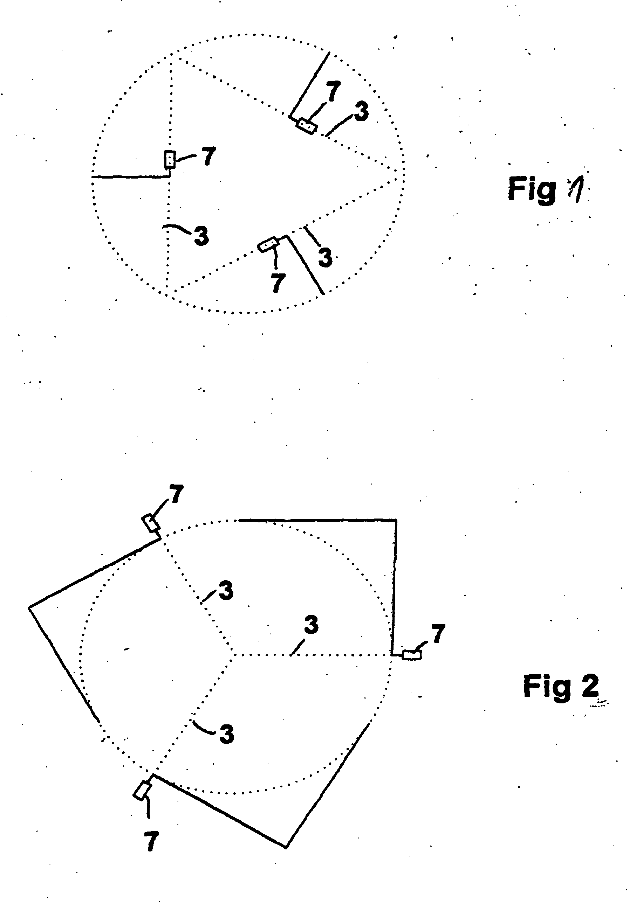

Pour les figures 1 à 7 on a représenté uniquement les bras et les paliers de pivots.

En rejetant vers l'extérieur les pivots d'articulation des bras et en conformant les bras et les éléments de liaison comme si ces bras avait une longueur utile proche de la distance entre le centre de la grande base et l'extrémité du bras sur laquelle s'articule l'élément de liaison, on va permettre d'augmenter la longueur opérationnelle des bras. En position que l'on appellera neutre, la tête se trouve à l'aplomb de la grande base et la force qui est exercée sur cette tête par un bras prolongé de son élément de liaison s'exerce dans un plan radial à la tête.

Dans les dessins figures 8 et 9, on a représenté les éléments de liaison sous forme de segments rectilignes avec une extrémité de bras dans un plan radial médian aux points d'ancrage des éléments de liaison sur la tête mais une autre configuration de l'ensemble de ces bras et des éléments de liaison (par exemple éléments en S) pourrait convenir. Cette forme en S pourrait être indépendante de l'architecture du robot (orientation des axes et position des paliers).

Dans des formes simples le bras peut être droit, en L , en L tronqué ou courbe.

On va détailler ci-après quelques variantes.

Dans une première version (figure 2,3,4) les axes 3 de pivot sont montés radiaux avec un point d'intersection commun disposé au centre de la grande base. Il en est de même des axes inclinés qui se rejoignent aussi en un point d'intersection.

Cela permet d'avoir la longueur maximale de bras fictif.

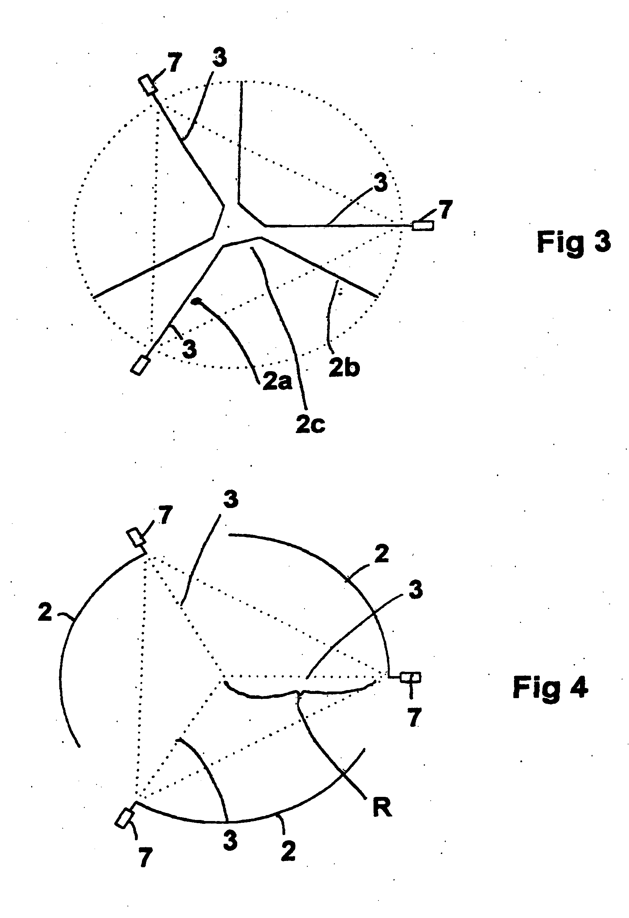

Chaque bras (figure 3) comprend deux parties, une partie proximale 2a coaxiale à l'axe de rotation de l'actionneur et une partie distale 2b qui s'étend selon un deuxième axe également radial formant un angle de 90° avec la partie proximale.

Cette partie distale se raccorde à la partie proximale en un point proche de l'intersection des trois axes de pivot.

Ainsi la longueur du bras fictif est égale au rayon R définissant l'encombrement des bras.

L'extrémité du bras peut donc se déplacer approximativement entre +90° et -90° par rapport au plan dit de grande base sans rencontrer un obstacle.

L'amplitude de déplacement vertical de la tête depuis la position neutre, les bras étant horizontaux, est au plus proche de R la distance entre le point central de la grande base et l'extrémité du bras.

Les axes de pivot sont répartis angulairement selon un pas de 120°. La position angulaire des axes de pivot peut être non régulière, c'est-à-dire les angles ne sont pas nécessairement tous à 120°. Bien entendu si on dispose d'un robot à quatre bras, la disposition angulaire est différente.

C'est sur la partie distale que s'articule l'élément de liaison.

La longueur effective de basculement des éléments 6 de liaison est donc la distance mesurée entre les articulations de ces éléments de liaison aux bras et le centre de la grande base.

Du fait de cette disposition, la rotation du bras autour de l'axe de pivot n'est pas limitée par un obstacle situé dans la partie centrale.

On comprend bien que les actionneurs sont déplacés vers l'extérieur de la surface de croisement des axes.

Une partie 2c intermédiaire relie les parties proximale 2a et distale 2b du bras formant un L tronqué qui permet de laisser une espace libre pour éventuellement un bras 10 préhenseur et pour tenir compte de la section des bras.

Dans une seconde forme de réalisation du bras (figure 2), l'axe de pivot est toujours radial et l'axe de rotation de l'actionneur attaque perpendiculairement la partie 2a proximale du bras qui se prolonge par la partie distale qui est à 90° formant un L dont le coin du L est sortant. Cette partie distale est parallèle à l'axe de rotation de l'actionneur et donc à l'axe de pivot.

Dans une 3^{ème} variante et 4^{ième} variante de réalisation, les axes 3 de pivots forment un triangle en dehors duquel sont montés les paliers 7.

Les bras ont également une forme permettant de positionner la tête en position neutre à la verticale de la grande base.

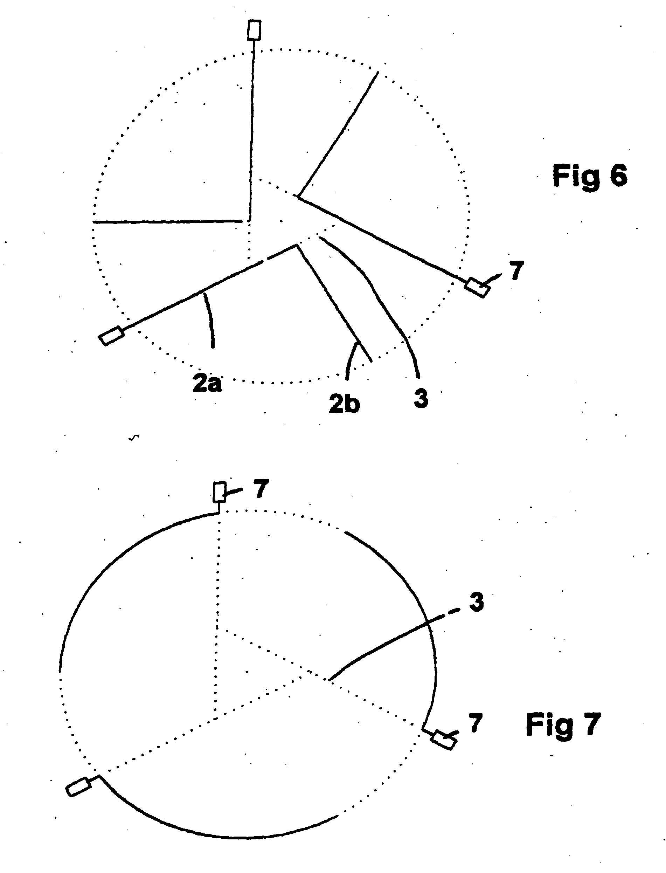

Dans l'exemple représenté figure 6, le bras à une forme en L avec le coin rentrant orienté vers le centre.

On a une configuration proche du dispositif de la figure 3 mais la partie 2a proximale n'est pas radiale.

La partie proximale du bras est coaxiale à l'axe de pivot. Du fait que les paliers 7 sont reportés à l'extérieur de la surface définie par l'intersection des axes de pivots, cette surface peut être réduite à sa valeur limite en sorte que la longueur effective du bras est sensiblement égale à la distance entre le centre de la grande base et l'extrémité du bras donc sensiblement au rayon R définissant l'encombrement.

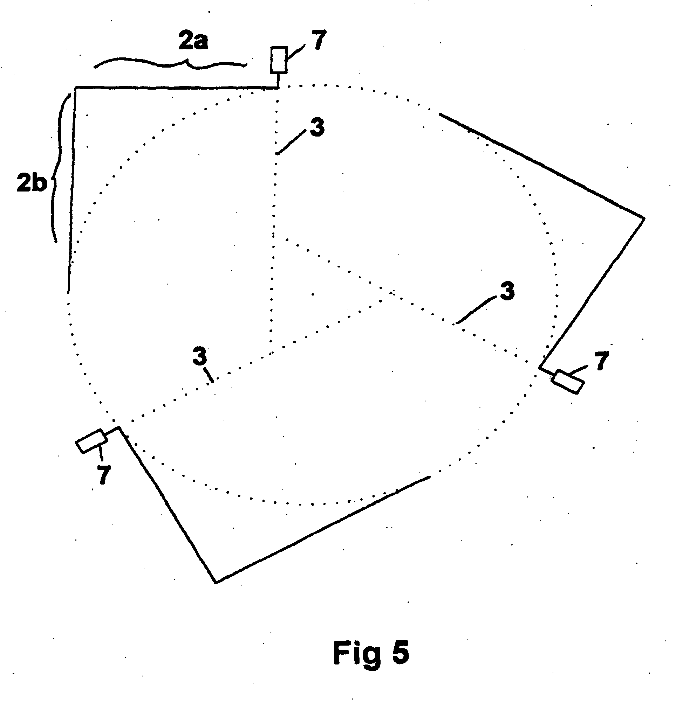

Dans la quatrième variante figure 5, les axes de pivots des bras forment également un triangle mais le bras en L a son coin du L sortant comme dans la figure 2.

Comme on peut le voir sur les dessins figure 8, 9, les éléments de liaison sont reliés au bras et à la tête par des articulations à deux degrés de liberté tels des cardans.

Ils se composent de deux profilés formant un parallélogramme déformable.

Ainsi lors de ses déplacements, la tête reste toujours orientée dans la même direction et a toujours la même inclinaison.

On a représenté également un robot avec des bras courbes figure 4,7.

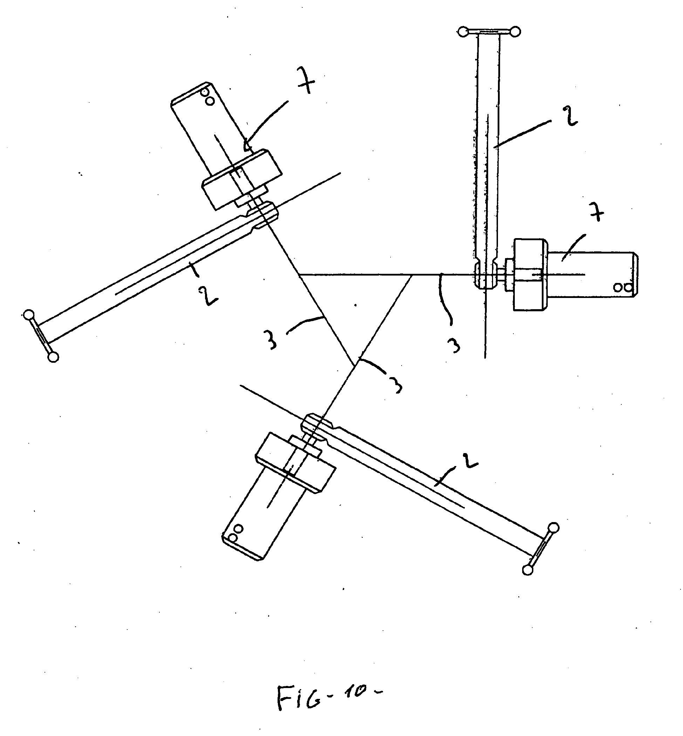

La figure 10 montre un robot vu de dessus, les bras étant rectilignes (les éléments de liaison sont partiellement représentés et la tête n'est pas représentée).

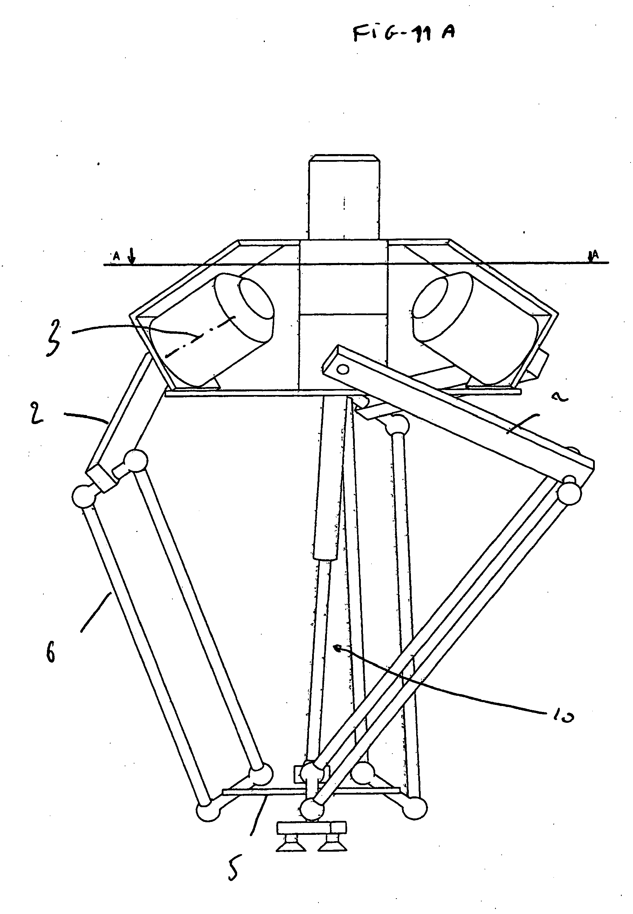

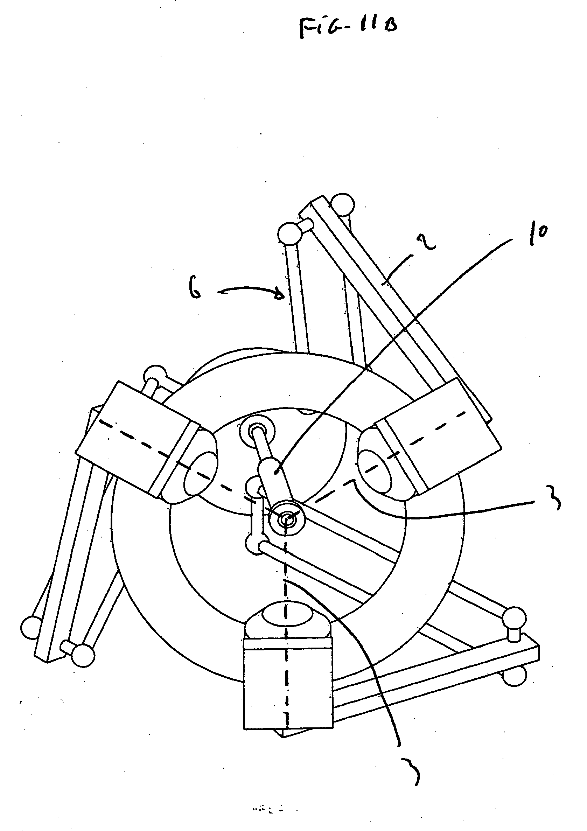

On voit entre autre que le dispositif de déplacement (figures 8, 9,11A, 11B) comprend un préhenseur 10 à transmission télescopique. Ce préhenseur est monté en son centre (centre de la pyramide à trois cotés lorsque celle ci est en son point zéro, les bras étant dans le même plan que les axes de pivot.).

Un guidage en rotation, pour ce préhenseur est réalisé sur la tête du dispositif.

Un actionneur supplémentaire peut faire tourner le préhenseur autour de son axe longitudinal.

La partie haute de ce préhenseur peut prendre appui sur l'un des bras. Une connexion coaxiale peut amener la puissance et la commande du préhenseur au travers du bras.

Le préhenseur peut être équipé d'une ventouse, de griffes ou tout autre moyen pour saisir un objet.

Le préhenseur est souvent mobile autour de son axe longitudinal et il est souvent constitué d'un actionneur, d'une articulation haute, d'une transmission télescopique (deux tiges qui coulissent l'une dans l'autre), d'une articulation basse (cardan ou rotule) positionnée sur la tête et d'un organe de préhension.

Avantageusement, l'articulation haute se positionne au dessus du plan A contenant les bras lorsqu'ils sont horizontaux. C'est à dire, par rapport au plan A, elle se situe dans l'espace opposé à celui contenant la tête. Ou encore le plan A est disposé entre l'articulation haute et la tête.

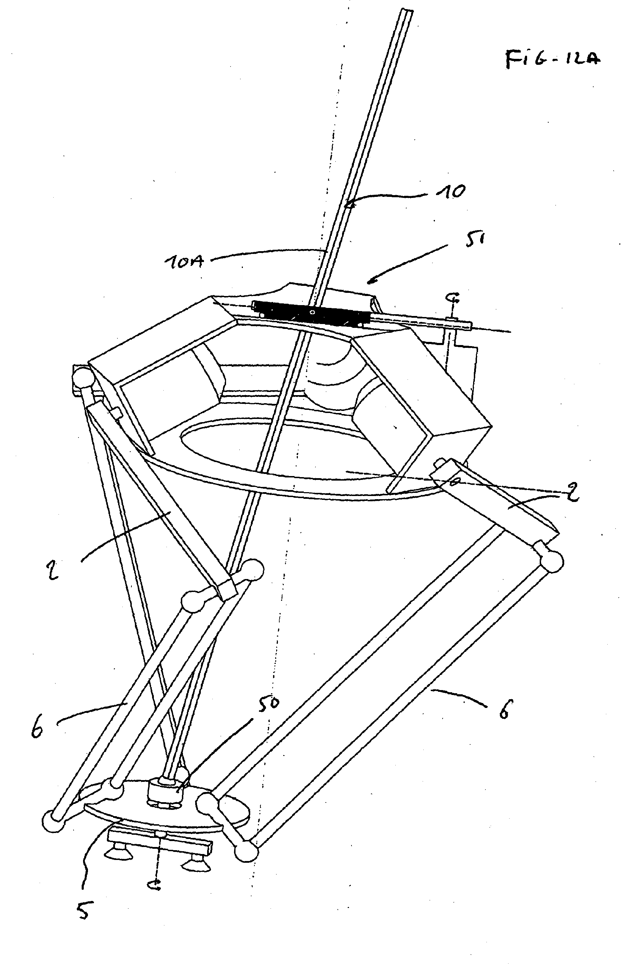

On a représenté, en figure 12A, un préhenseur 10 qui pourrait être monté sur un robot ne reprenant pas nécessairement les caractéristiques décrites, donc indépendant de la position des axes de pivot et des paliers.

Le préhenseur est fixé sur la tête 5 par une articulation 50 tandis que sa partie haute (la tige 10A) coulisse librement dans un moyen de guidage 51 orientable.

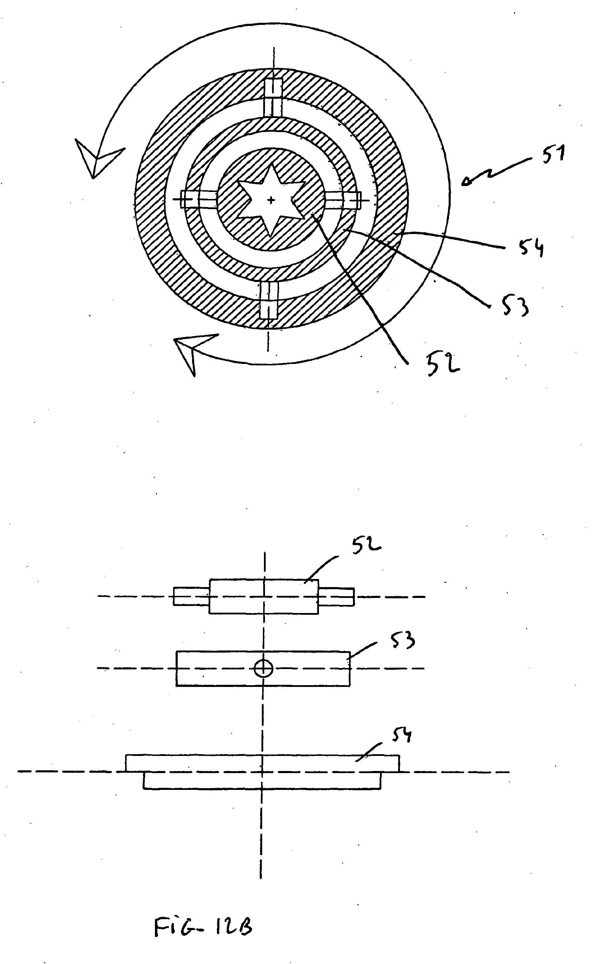

Ce moyen de guidage orientable à la manière d'une rotule est traversé par le préhenseur pour un guidage axial. La figure 12B montre une bague interne 52 traversée par la tige du préhenseur.

Cette bague 52 interne est montée basculante sur une bague intermédiaire 53 elle-même montée basculante sur une bague externe 54. Cette bague externe peut être entrainée en rotation. Le guidage axial de la bague interne ne permet pas la rotation de la tige dans ce guidage axial et par conséquent lorsque la bague externe tourne, le préhenseur tourne.

Le positionnement du moyen de guidage axial est choisi selon la configuration du robot sachant que plus il est haut plus l'angle de travail sera faible mais plus la tige sera longue. Selon le besoin, on choisira de diminuer cet angle en positionnant le moyen de guidage au dessus du plan A ou de réduire la tige en le déplaçant vers le bas. Les actionneurs sont, par exemple, des moteurs électriques connus sous l'appellation « brushless » mais il pourrait s'agir de moyens différents. Ils peuvent être montés en bout d'axe mais une transmission par courroie crantée ou autre permet de les positionner dans un plan différent.

Il peut être prévu que l'actionneur de ce préhenseur soit monté directement sur la tête mais cela augmente le poids donc l'inertie.

On notera que sur le montage dit radial, il n'existe qu'un seul point du plan de déplacement de la dite tête où l'axe orthogonal au plan de la tête coïncide avec le point de croisement des axes de pivots.

On notera également que la distance entre le centre de la tête et l'articulation entre le bras 2 et l'élément de liaison 6 varie lors du déplacement de la tête.

La tête peut être à disposition delta ou radiale.

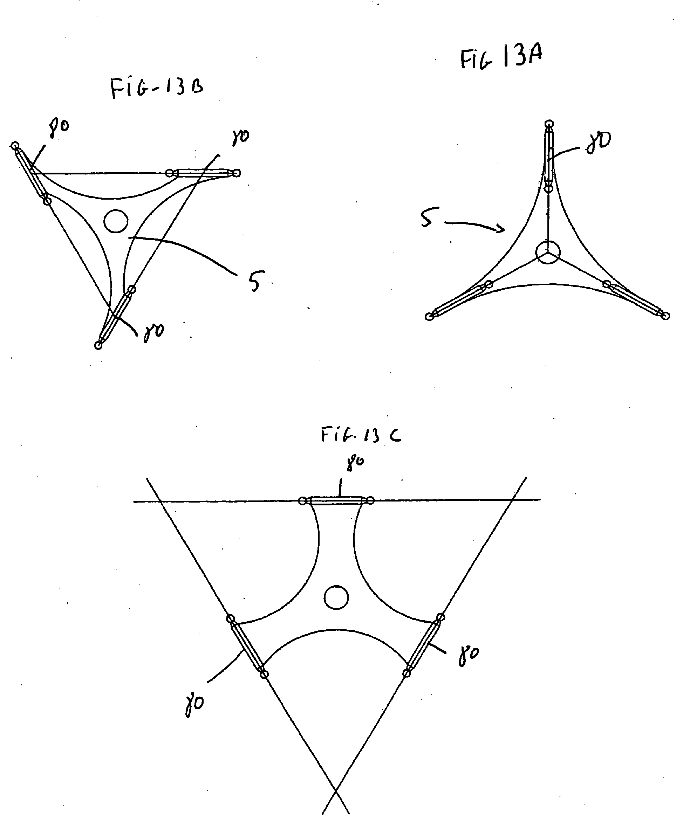

On a représenté en figures 13A, 13B, 13C des exemples de têtes 5.

Dans l'exemple figure 13A, les pièces transversales 80 qui joignent les deux points d'articulations bas des éléments de liaison à la tête sont disposés radialement par rapport à la tête.

Dans les versions figures 13B et 13C les axes longitudinaux de ces pièces transversales forment un triangle.

Sur la figure 13B le point d'attache des pièces transversales est au sommet du triangle alors que pour la figure 13C, le point d'attache est au milieu du coté du triangle. Les axes de ces pièces transversales peuvent être parallèles ou inclinés par rapport au plan de travail de la tête 5.

## Revendications

1. Dispositif de déplacement dans les trois dimensions de l'espace du type parallèle comprenant au moins trois bras (2) pivotants chacun autour d'un axe (3) de pivot guidé en rotation sur au moins un palier (7), chacun des bras étant actionné par un actionneur (4), et chacun de ces bras étant, en outre, relié à une tête (5) formant une petite base par l'intermédiaire d'éléments de liaison (6) articulés respectivement sur la tête (5) et sur le bras (2) à deux degrés de liberté, la tête gardant toujours son orientation et son inclinaison en se déplaçant dans un plan, les dits axes (3) de pivots étant dans un plan parallèle au plan de déplacement de la tête ou inclinés par rapport à un tel plan, ce dispositif de déplacement étant **caractérisé en ce que** les axes (3) de pivots définissent un point d'intersection commun ou que les paliers (7) de pivot des bras sont montés totalement à l'extérieur polygone délimité par les intersections deux à deux des axes de pivot ou de leurs projections sur le plan des paliers (7).

2. Dispositif de déplacement selon la revendication 1 **caractérisé en ce que** les bras ont une forme de L.

3. Dispositif de déplacement selon la revendication 2 **caractérisé en ce que** les bras ont une forme de L tronqué.

4. Dispositif de déplacement selon la revendication 1 **caractérisé en ce que** les bras ont une forme courbe.

5. Dispositif de déplacement selon l'une quelconque des revendications précédentes **caractérisé en ce qu'**il comprend un préhenseur à transmission télescopique.

6. Dispositif de déplacement selon la revendication 5 **caractérisé en ce qu'**une connexion coaxiale amène la puissance et la commande du préhenseur au travers d'un bras.

7. Dispositif de déplacement selon la revendication 5 comprenant pour le préhenseur, une articulation haute, une transmission télescopique, une articulation basse **caractérisé en ce que** le plan A contenant les bras lorsqu'ils sont horizontaux est situé entre l'articulation haute et la tête.

8. Dispositif de déplacement selon l'une quelconque des revendications 1 à 7 **caractérisé en ce qu'**il comprend un préhenseur fixé sur la tête (5) par une articulation (50) tandis que sa partie haute coulisse librement dans un moyen de guidage (51) orientable

## Claims

1. Parallel-type device for displacement in the three dimensions of space comprising at least three arms (2) each pivoting about a pivot axis (3) guided in rotation on at least one bearing (7), each of the arms being actuated by an actuator (4) and each of these arms being, furthermore, connected to a head (5) forming a small base via connection elements (6) articulated respectively to the head (5) and to the arm (2) having two degrees of freedom, the head always maintaining its orientation and its inclination while being displaced in a plane, said pivot axes (3) being in one plane parallel to the plane of displacement of the head or inclined relative to such a plane, this displacement device being **characterised in that** the pivot axes (3) define a common point of intersection or **in that** the pivot bearings (7) of the arms are mounted entirely outside the polygon delimited by the pairwise intersections of the pivot axes or the projections thereof on the plane of the bearings (7).

2. Displacement device according to claim 1, **characterised in that** the arms are L-shaped.

3. Displacement device according to claim 2, **characterised in that** the arms are truncated L-shaped.

4. Displacement device according to claim 1, **characterised in that** the arms have a curved shape.

5. Displacement device according to any one of the preceding claims, **characterised in that** it comprises a telescopic transmission gripper.

6. Displacement device according to claim 5, **characterised in that** a coaxial connection supplies the power and the control of the gripper through an arm.

7. Displacement device according to claim 5, comprising for the gripper a high articulation, a telescopic transmission, a low articulation, **characterised in that** the plane A containing the arms when they are horizontal is situated between the high articulation and the head.

8. Displacement device according to any one of claims 1 to 7, **characterised in that** it comprises a gripper fixed to the head (5) by an articulation (50) whereas its height part slides freely in an orientable guide means (51).

## Patentansprüche

1. Vorrichtung zur Bewegung im dreidimensionalen Raum vom Typ Parallelverschiebung, mit wenigstens drei Armen (2), die sich jeweils um eine Schwenkachse (3) drehen, die auf wenigstens einem Lager (7) drehbar geführt ist, wobei jeder Arm durch ein Stellglied (4) betätigt wird und jeder der Arme zudem mit einem Kopf (5) verbunden ist, der durch Verbindungselemente (6), die an dem Kopf (5) bzw. an dem Arm (2) mit zwei Freiheitsgraden angelenkt sind, eine kleine Basis bildet, wobei der Kopf stets seine Ausrichtung und seine Neigung behält, indem er sich in einer Ebene bewegt, wobei die Schwenkachsen (3) in einer Ebene parallel zur Bewegungsebene des Kopfs oder schräg zu einer solchen Ebene liegen, wobei die Bewegungsvorrichtung **dadurch gekennzeichnet ist, dass** die Schwenkachsen (3) einen gemeinsamen Schnittpunkt definieren oder dass die Schwenklager (7) der Arme vollständig außerhalb des Vielecks montiert sind, das durch die paarweisen Überschneidungen der Schwenkachsen oder ihrer Projektionen auf die Ebene der Lager (7) begrenzt ist.

2. Bewegungsvorrichtung nach Anspruch 1, **dadurch gekennzeichnet, dass** die Arme eine L-Form haben.

3. Bewegungsvorrichtung nach Anspruch 2, **dadurch gekennzeichnet, dass** die Arme eine abgestumpfte L-Form haben.

4. Bewegungsvorrichtung nach Anspruch 1, **dadurch gekennzeichnet, dass** die Arme eine gekrümmte Form haben.

5. Bewegungsvorrichtung nach einem der vorhergehenden Ansprüche, **dadurch gekennzeichnet, dass** sie einen Greifer mit Teleskopantrieb umfasst.

6. Bewegungsvorrichtung nach Anspruch 5, **dadurch gekennzeichnet, dass** ein koaxialer Anschluss die Leistung und die Steuerung des Greifers durch einen Arm leitet.

7. Bewegungsvorrichtung nach Anspruch 5, die für den Greifer ein oberes Gelenk, einen Teleskopantrieb, ein unteres Gelenk umfasst, **dadurch gekennzeichnet, dass** die Ebene A, welche die Arme beinhaltet, wenn diese waagerecht sind, zwischen dem oberen Gelenk und dem Kopf liegt.

8. Bewegungsvorrichtung nach einem der Ansprüche 1 bis 7, **dadurch gekennzeichnet, dass** sie einen Greifer umfasst, der am Kopf (5) durch ein Gelenk (50) befestigt ist, während dessen oberer Teil frei in einem schwenkbaren Führungsmittel (51) gleitet.
